(19) **Europäisches Patentamt**
**European Patent Office**
**Office européen des brevets**

(11) **EP 3 434 529 B1**

(12) **FASCICULE DE BREVET EUROPEEN**

(45) Date de publication et mention
de la délivrance du brevet:
**02.12.2020 Bulletin 2020/49**

(51) Int Cl.:
***B60R 13/08*** (2006.01)

(21) Numéro de dépôt: **18185264.1**

(22) Date de dépôt: **24.07.2018**

(54) **PIÈCE D'INSONORISATION DE VÉHICULE AUTOMOBILE ET PROCÉDÉ DE FABRICATION ASSOCIÉ**

SCHALLDÄMMELEMENT FÜR KRAFTFAHRZEUG, UND ENTSPRECHENDES HERSTELLUNGSVERFAHREN

SOUNDPROOFING PART OF A MOTOR VEHICLE AND ASSOCIATED MANUFACTURING METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.07.2017 FR 1757001**

(43) Date de publication de la demande:
**30.01.2019 Bulletin 2019/05**

(73) Titulaire: **Faurecia Automotive Industrie**
**92000 Nanterre (FR)**

(72) Inventeurs:
• **BATHELIER, Xavier**
**08240 Saint-Pierremont (FR)**
• **MARCEL, Valérie**
**55150 Brandeville (FR)**

(74) Mandataire: **Lavoix**
**2, place d'Estienne d'Orves**
**75441 Paris Cedex 09 (FR)**

(56) Documents cités:
WO-A1-03/021096      WO-A1-2009/019220
WO-A1-2016/151209    DE-A1- 10 143 167
US-A- 3 966 526      US-A- 4 263 356
US-B2- 7 757 809

**Description**

La présente invention concerne une pièce d'insonorisation de véhicule automobile selon le préambule de la revendication 1.

La pièce d'insonorisation est notamment destinée à former tout ou partie d'un composant d'insonorisation d'un véhicule automobile.

Le composant est destiné à résoudre les problèmes acoustiques qui se posent dans un espace sensiblement clos, tel que l'habitacle du véhicule automobile (plancher, pavillon, tablier, etc.), au voisinage de sources de bruit telles qu'un moteur, le contact de pneumatiques avec une route, etc.

En général, dans le domaine des basses fréquences, les ondes acoustiques engendrées par les sources de bruit précitées subissent un « amortissement » par des matériaux sous forme de feuilles simples ou doubles (sandwich précontraint) ayant un comportement viscoélastique ou par atténuation acoustique d'un système masse-ressort poreux et élastique.

Au sens de la présente invention, un ensemble d'insonorisation assure une « isolation » lorsqu'il empêche l'entrée d'ondes acoustiques à moyennes et hautes fréquences dans l'espace insonorisé, essentiellement par réflexion des ondes vers les sources de bruit ou l'extérieur de l'espace insonorisé.

Un ensemble d'insonorisation fonctionne par « absorption acoustique » (dans le domaine des moyennes et hautes fréquences) lorsque l'énergie des ondes acoustiques se dissipe dans un matériau absorbant.

Un ensemble d'insonorisation performant doit fonctionner à la fois en assurant une bonne isolation et une bonne absorption. Pour caractériser la performance d'un tel ensemble, on utilise la notion d'indice de réduction sonore NR, qui prend en compte les deux notions d'isolation et d'absorption. Cet indice peut être calculé par l'équation suivante :

$$NR(dB) = TL - 10\log(S/A),$$

où TL est l'indice d'affaiblissement acoustique (ci-après indice d'affaiblissement) traduisant l'isolation. Plus cet indice est élevé, meilleure est l'isolation.
A est la surface d'absorption équivalente. Plus A est élevé, meilleure est l'absorption. S est la surface de l'ensemble.

Les ensembles d'insonorisation utilisés dans les véhicules automobiles comprennent généralement un corps de base poreux, tel qu'une couche de mousse à cellules ouvertes, ou une couche de feutre.

Le corps de base est parfois associé avec d'autres couches, afin d'améliorer les propriétés en absorption ou en isolation. Ces couches sont notamment des couches de masse lourde pour augmenter l'isolation, ou/et des couches de non tissé, pour augmenter l'absorption.

L'utilisation d'un non-tissé présentant une résistance au passage de l'air élevée sur une couche de feutre ou sur une couche poreuse permet de réaliser un complexe biperméable présentant une absorption large bande. Le non tissé est cependant coûteux.

En outre, la réalisation de la couche de mousse par moussage dans un moule conduit fréquemment à former une couche surfacique étanche sur le corps de base, au contact des parois du moule.

Une telle couche étanche est préjudiciable aux performances en absorption souhaitées, car elle génère des ondes sonores qui sont transmises par le squelette de la mousse. En outre, la couche étanche rend l'utilisation d'un non-tissé inefficace.

Pour pallier ce problème, il est connu de disposer dans le moule de moussage un agent démoulant sur la paroi du moule. Des adjuvants présents dans l'agent démoulant réagissent avec le matériau précurseur de la mousse, empêchant la formation de la peau.

Un tel procédé ne donne pas entière satisfaction. En effet, les adjuvants sont généralement constitués à base de solvants et génèrent donc des composés organiques volatiles préjudiciables à la santé. Ils sont par ailleurs interdits dans de nombreux pays de production.

Par ailleurs, l'ajout d'un non-tissé nécessite une étape de procédé supplémentaire, qui, conjuguée au coût matière du non-tissé, augmente significativement le coût de production de la pièce.

US 3 966 526 A et US 4 263 356 A décrivent une pièce d'insonorisation de véhicule automobile selon le préambule de la revendication 1.

Un but de l'invention est d'obtenir une pièce d'insonorisation très efficace, la pièce présentant une forme complexe adaptée à l'intérieur d'un véhicule automobile, tout en étant peu coûteuse et sûre à fabriquer.

A cet effet, l'invention a pour objet une pièce d'insonorisation du type précité, selon la revendication 1.

La pièce selon l'invention peut comprendre l'une ou plusieurs des caractéristiques des revendications 2 à 5, prise(s) isolement ou suivant toute combinaison techniquement possible.

L'invention a également pour objet un procédé de fabrication d'une pièce d'insonorisation de véhicule automobile selon la revendication 6.

Le procédé selon l'invention peut comprendre l'une ou plusieurs des caractéristiques des revendications 7 à 9, prise(s) isolement ou suivant toute combinaison techniquement possible.

L'invention sera mieux comprise à la lecture de la description qui va suivre, donnée uniquement à titre d'exemple, et faite en se référant aux dessins annexés, sur lesquels :

- la figure 1 est une vue de dessus d'une première pièce d'insonorisation selon l'invention comprenant un corps de base en mousse ;
- la figure 2 est une vue en coupe d'un détail de la pièce de la figure 1 ;
- la figure 3 est une vue de dessus agrandie d'un détail de la pièce de la figure 1 ;
- la figure 4 est une vue schématique en coupe d'un moule de moussage durant la formation du corps de base en mousse de la pièce de la figure 1 ;
- la figure 5 est une vue schématique en coupe d'un conformateur de la pièce de la figure 1, lors de la réalisation de perforations dans la couche surfacique ;
- les figures 6 et 7 sont des courbes représentant l'absorption en fonction de la fréquence pour des pièces d'insonorisation selon l'invention et selon l'état de la technique, respectivement pour deux types de mousses ;
- la figure 8 est une vue analogue à la figure 2, pour une deuxième pièce d'insonorisation selon l'invention présentant un corps de base en feutre ;
- la figure 9 représente des courbes analogues à celles de la figure 6, pour une pièce d'insonorisation selon l'invention et des pièces selon l'état de la technique.

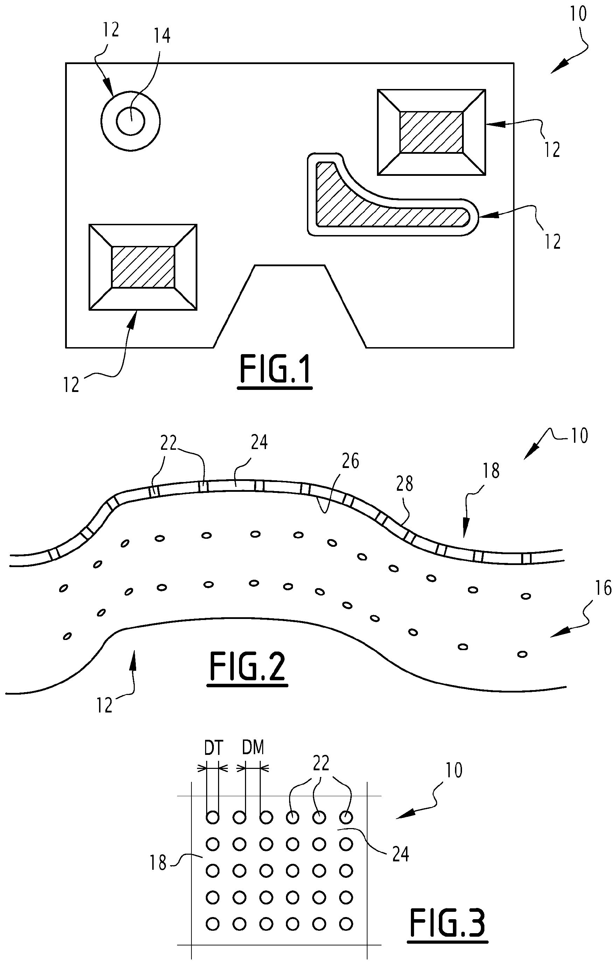

Une première pièce d'insonorisation 10 selon l'invention est représentée schématiquement sur les figures 1 et 2.

La pièce d'insonorisation 10 est destinée à être montée à l'intérieur d'un véhicule automobile. Dans cet exemple, la pièce d'insonorisation 10 forme un ensemble insonorisant destiné à être interposé entre l'habitacle du véhicule et le compartiment moteur.

En variante, la pièce d'insonorisation 10 est destinée à être posée sur le plancher du véhicule automobile, sur un passage de roue, ou plus généralement, à être appliquée sur une paroi du véhicule automobile pour réaliser une insonorisation.

La pièce d'insonorisation 10 présente des reliefs de conformation 12. Ces reliefs 12 sont par exemple des creux ou/et des bosses ménagés sur une face intérieure ou extérieure de la pièce 10, ou au voisinage d'une ouverture 14 ménagée dans la pièce 10.

Les creux ou les bosses résultent par exemple respectivement de régions d'épaisseurs inférieure ou supérieure présentes dans la pièce 10, ou de régions conformées sur une surface lors de la fabrication de la pièce 10.

Les reliefs 12 sont définis pour s'adapter à la surface sur laquelle la pièce 10 est posée dans le véhicule automobile.

En référence à la figure 2, la pièce 10 comporte un corps de base 16 et au moins une couche surfacique 18 appliquée sur le corps de base 16.

Dans cet exemple, le corps de base 16 est une couche de mousse. La couche de mousse est de préférence une couche de mousse à cellules ouvertes.

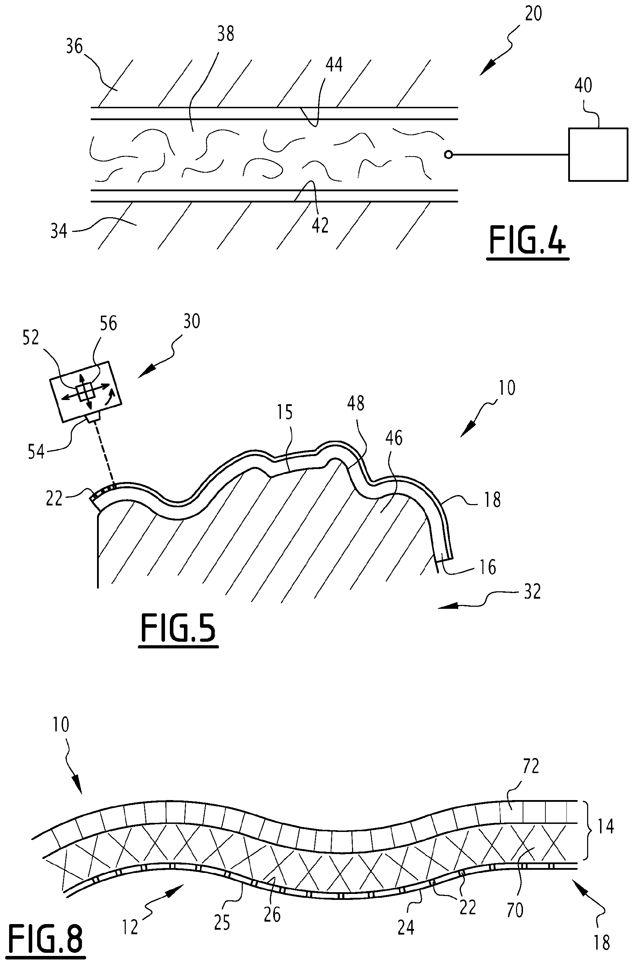

Elle est par exemple réalisée par moussage à partir d'un mélange précurseur dans un moule de moussage 20 représenté schématiquement sur la figure 4.

La couche de mousse est par exemple en polyuréthane. Le polyuréthane est obtenu à partir d'un mélange précurseur comprenant un isocyanate et un polyol.

L'épaisseur du corps de base 16 est supérieure à celle de la couche surfacique 18. L'épaisseur du corps de base 16 est par exemple supérieure à 5 mm et est comprise notamment entre 5 mm et 15 mm.

La résistance au passage de l'air du corps de base 16 est inférieure à celle de la couche surfacique 18. Dans cet exemple, la résistance au passage de l'air du corps de base 16 est comprise entre 100 N.s/m$^3$ et 300 N.s/m$^3$.

La résistance au passage de l'air ou sa résistivité est mesurée par la méthode décrite dans la thèse "Mesures des paramètres caractérisant un milieu poreux. Etude expérimentale du comportement acoustique des mousses aux basses fréquences.", Michel HENRY, soutenue le 3 octobre 1997 à l'Université du Mans.

Dans l'exemple représenté sur les figures 1 et 2, la couche surfacique 18 est formée du même matériau que le corps de base 16. Elle est ici d'un seul tenant avec le corps de base 16.

La couche surfacique 18 forme ainsi une peau issue du moulage du corps de base 16 dans le moule de moussage 20.

L'épaisseur maximale de la couche surfacique 18 est inférieure à 20 % de l'épaisseur maximale du corps de base 16. Cette épaisseur est par exemple inférieure à 1 mm et comprise notamment entre 0,1 mm et 1 mm.

Selon l'invention, la couche surfacique 18 présente une pluralité de perforations traversantes 22 ménagées à travers la couche surfacique 18, et, entre les perforations 22, des régions 24 étanches au passage de l'air.

Chaque perforation traversante 22 débouche à la fois dans une face de contact 26 de la couche surfacique 18, assemblée sur le corps de base 16, et dans une face 28 opposée à la face de contact 26.

Chaque perforation traversante 22 présente une dimension transversale DT maximale inférieure à 1,5 mm, avantageusement inférieure à 1 mm, notamment comprise entre 0,1 mm et 0,5 mm.

Dans cet exemple, chaque perforation traversante 22 présente une section transversale circulaire, la dimension transversale DT maximale de la perforation traversante 22 correspondant au diamètre maximal de la perforation traversante 22.

En variante, au moins une perforation traversante 22 présente une section transversale non circulaire.

Avantageusement, la section transversale de chaque perforation traversante 22 présente une aire constante entre la face de contact 26 et la face opposée 28.

Comme on le verra plus bas, chaque perforation traversante 22 est réalisée par ablation laser à l'aide d'un appareil 30 de perforation, représenté schématiquement sur la figure 5.

La distance minimale DM séparant deux perforations 22 adjacentes est inférieure à 3 fois la dimension transversale maximale DT des deux perforations adjacentes 22.

Par exemple, la distance minimale DM est inférieure à 0,5 mm et est comprise entre 0,1 mm et 0,3 mm.

Ainsi, la densité surfacique de perforations 22 dans la couche surfacique 18 est supérieure à 20 perforations par centimètre carré et est notamment comprise entre 50 perforations par centimètre carré et 600 perforations par centimètre carré, avantageusement entre 50 perforations par centimètre carré et 500 perforations par centimètre carré.

Dans l'exemple illustré par la figure 3, les perforations 22 sont avantageusement agencées suivant un motif géométrique régulier, par exemple en forme de polygones, notamment de carré, pour définir des lignes et des colonnes de perforations 22.

Ainsi, la résistance au passage de l'air de la couche surfacique 18 munie des perforations 22 est supérieure à 110 % de la résistance au passage de l'air du corps de base 16.

La résistance au passage de l'air de la couche surfacique 18 munie des perforations 22 est supérieure à 250 N.m.s$^{-3}$, et est notamment comprise entre 250 N.m.s$^{-3}$ et 1000 N.m.s$^{-3}$.

Comme on le verra plus bas, la pièce 10 forme ainsi dans cet exemple un complexe biperméable réalisé d'un seul tenant.

La pièce 10 selon l'invention est fabriquée dans une installation comprenant le moule de moussage 20 illustré schématiquement sur la figure 4, un conformateur 32 définissant une surface de maintien 15, illustrée schématiquement sur la figure 5, et l'appareil de perforation 30, également visible sur la figure 5.

Le moule de moussage 20 comporte un premier demi-moule 34 et un deuxième demi-moule 36 définissant entre eux une cavité 38 de moussage. Le moule de moussage 20 comporte un ensemble 40 d'injection d'un mélange précurseur de mousse dans la cavité de moussage 38.

Chaque demi-moule 34, 36 présente une surface de contact 42, 44 respective délimitant la cavité de moussage 38.

Le conformateur 32 comporte une matrice 46 définissant sur la surface de maintien 15 des reliefs 48 complémentaires aux reliefs 12 de la pièce 10.

L'appareil de perforation 30 comporte une source laser 52, une optique 54 de focalisation, et un agencement 56 de positionnement relatif de l'appareil 30 par rapport à la surface de maintien 15.

La source laser 52 est propre à engendrer un rayon laser envoyé à l'optique de focalisation 54. L'optique de focalisation 54 est propre à concentrer la puissance émise sur un point choisi situé à l'écart de l'appareil 30, au niveau de la couche surfacique 18.

L'optique de focalisation 54 est propre à être contrôlée en puissance et en position pour réaliser une ablation de matière choisie et reproductible dans la couche surfacique 18. Cette ablation crée chaque perforation 22 ayant les caractéristiques géométriques définies plus haut, en maintenant autour de chaque perforation 22 une région étanche 24 au passage de l'air.

L'agencement de positionnement 56 est propre à déplacer l'optique de focalisation 54 par rapport à la surface de maintien 15 suivant au moins deux axes, et de préférence suivant au moins trois axes, ainsi qu'à faire pivoter l'optique de focalisation 54 par rapport à la surface de maintien 15 suivant au moins un axe, de préférence suivant au moins trois axes.

Ainsi, l'appareil de perforation 30 est propre à orienter le rayon laser appliqué sur la couche surfacique 18, en fonction du relief 12 local présent sur cette couche 18 lorsqu'elle est appliquée sur la surface de maintien 15.

En particulier, l'appareil de perforation 30 est propre à maintenir une orientation choisie du rayon laser par rapport à la normale à la couche surfacique 18 au point de contact entre le rayon laser et la couche surfacique 18.

Un procédé de fabrication de la pièce d'insonorisation 10 visible sur les figures 1 et 2 va maintenant être décrit.

Initialement, un mélange précurseur de mousse est introduit par l'ensemble d'introduction 40 dans la cavité de moussage 38 du moule de moussage 20.

Le moule de moussage 20 étant fermé, le mélange précurseur remplit la cavité 38 par moussage, pour former le corps de base 16 après solidification.

Au contact des surfaces 42, 44 des demi-moules respectifs 32, 34, une couche surfacique 18 se forme à partir du même matériau que celui constituant le corps de base 16.

La couche surfacique 18 est alors dépourvue de perforations. Elle est de préférence totalement étanche au passage de l'air.

Aucun agent démoulant susceptible de réagir chimiquement avec le mélange précurseur n'est avantageusement utilisé dans le moule de moussage 20, ce qui limite les émissions de composés organiques volatiles au strict minimum. Le procédé selon l'invention est donc mis en oeuvre de manière particulièrement sûre.

L'ensemble formé dans le moule de moussage 20 est ensuite extrait du moule 20 et est amené sur la surface de maintien 15 du conformateur 32

L'ensemble est placé au contact de la surface de maintien 15. Les reliefs 12 de la pièce 10 épousent les reliefs complémentaires 48 de la surface de maintien 15.

L'appareil de perforation 30 est amené en regard de la surface de maintien 15.

Le corps de base 16 restant plaqué contre la surface de maintien 15, l'appareil de perforation 30 est activé pour ménager les perforations traversantes 22 présentant les caractéristiques définies plus haut à travers la couche surfacique 18.

À cet effet, pour chaque perforation 22 à ménager, l'agencement de positionnement 56 est déplacé en regard du point de la couche surfacique 18 sur lequel la perforation 22 doit être réalisée et est orienté angulairement par rapport à la normale à la couche surfacique 18. Puis, la source laser 52 est activée, et l'optique de focalisation 54 est réglée pour ménager la perforation 22 suivant les caractéristiques souhaitées.

Les perforations 22 sont donc réalisées avec une grande précision géométrique, et suivant la profondeur souhaitée, grâce au réglage précis de l'optique de focalisation 54, sans dégrader les régions 24 adjacentes qui restent ainsi étanches au passage de l'air.

La réalisation des perforations par ablation laser fonctionne à une vitesse très élevée, permettant de balayer l'ensemble de la pièce 10 en quelques dizaines de secondes. Ceci correspond au temps nécessaire pour le moulage de la pièce. L'opération de perforation s'effectue donc en temps masqué.

Le procédé selon l'invention permet d'obtenir des caractéristiques très précises en termes de résistance au passage de l'air pour la couche surfacique 18. Ces caractéristiques assurent des propriétés acoustiques en absorption nettement améliorées, par effet biperméable.

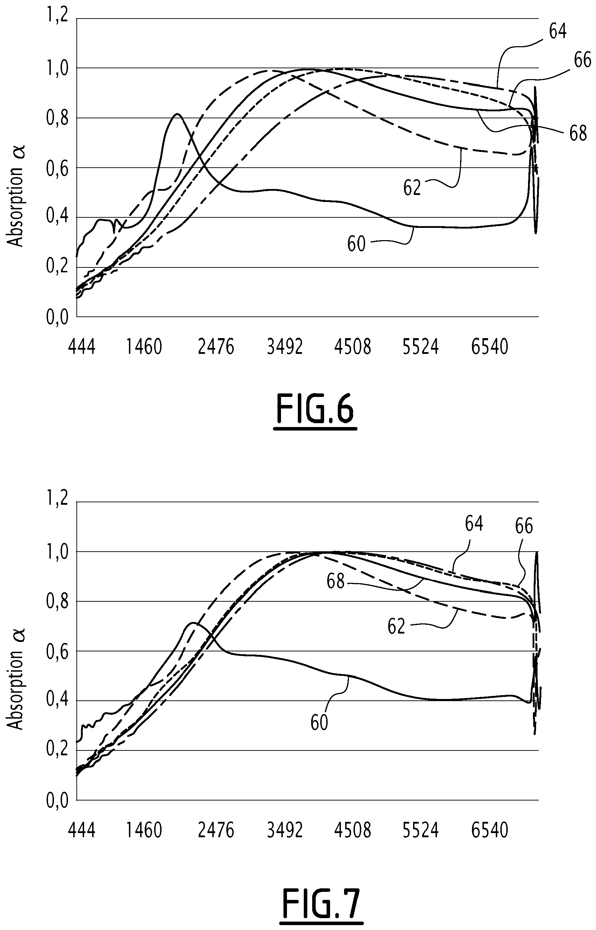

À titre d'exemple, la figure 6 illustre les courbes d'absorption en fonction de la fréquence pour différentes pièces.

La courbe 60 correspond à une pièce de l'état de la technique, dans laquelle la couche surfacique 18 est totalement étanche. De même, la courbe 62 correspond à une pièce de l'état de la technique, dans laquelle la couche surfacique 18 a totalement été supprimée pour maintenir uniquement le corps de base 16.

D'une manière surprenante, les courbes 64, 66, et 68, qui correspondent à des pièces 10 selon l'invention, avec des diamètres de perforations 22 respectivement égaux à 0,8 mm, 1 mm, 1,2 mm présentent une absorption acoustique très significativement améliorée par rapport aux pièces de l'état de la technique, même lorsque la couche surfacique 18 a été totalement retirée.

Ceci est observable également sur la figure 7, pour une autre mousse de polyuréthane constituant le corps de base 16, qui montre le même résultat.

Dans une variante, illustrée par la figure 8, le corps de base 16 comporte au moins une couche poreuse 70, 72 réalisée en feutre, et non en mousse. Le corps de base 16 est notamment une moquette.

Dans cet exemple, le corps de base 16 comporte une couche poreuse 70 réalisée en un feutre de base formée par exemple par étendage par air ou « Airlaid » et passage dans un four à air chaud. Il comporte également une couche d'aspect 72 en feutre, par exemple en feutre aiguilleté.

Les feutres sont par exemple réalisés à base d'un mélange de fibres naturelles telles que des fibres de coton, et de fibres synthétiques, tels que des fibres de polyoléfines, notamment de polypropylène et des fibres de polyester notamment de polyéthylène téréphtalate.

La couche surfacique 18 est réalisée à base d'un film continu assemblé sur le corps de base 16 par exemple par collage à l'aide de poudre de polyoléfine notamment de polyethylène.

Le film présente de préférence une épaisseur inférieure à 10 % de l'épaisseur du corps de base 16. L'épaisseur du film est par exemple inférieure à 50 micromètres et est comprise généralement entre 20 micromètres et 100 micromètres.

Il présente une masse surfacique inférieure à 200 g/m2, notamment comprise entre 20 g/m2 et 100 g/m2.

Le film est réalisé à base de polypropylène, polyéthylène ou polyester téréphtalate.

Comme précédemment, le film formant la couche surfacique 18 est muni de perforations traversantes 22. Il délimite, entre les perforations 22, des régions 24 étanches au passage de l'air.

Dans cet exemple, la résistance au passage de l'air de la couche surfacique 18 formée par le film est supérieure à 250 N.m.s$^{-3}$, et est notamment comprise entre 500 N.m.s$^{-3}$ et 1000 N.m.s$^{-3}$.

Pour réaliser la pièce 10, le film formant la couche surfacique 18, initialement dépourvu de perforations 22, est assemblé préalablement sur une couche de feutre 70. Puis, l'ensemble formé par le corps de base 16 et la couche surfacique 18 est amené sur la surface de maintien 15.

Ensuite, l'appareil de perforation 30 est amené en regard de la couche surfacique 18 et est activé, comme décrit précédemment, pour réaliser successivement toutes les perforations 22.

D'une manière surprenante, la couche surfacique 18 formée d'un simple film muni de perforations 22 présente des propriétés d'absorption analogues à celles d'un envers absorbant de moquette, avec une masse surfacique significativement réduite par rapport à un tel envers.

Grâce au procédé selon l'invention, la pièce 10 reste cependant très simple à fabriquer, et ses propriétés acoustiques peuvent être ajustées par la taille et la densité surfacique de perforations 22 réalisées. Les perforations 22 étant réalisées après la conformation de la pièce 10, le risque de bouchage des perforations 22 est significativement diminué.

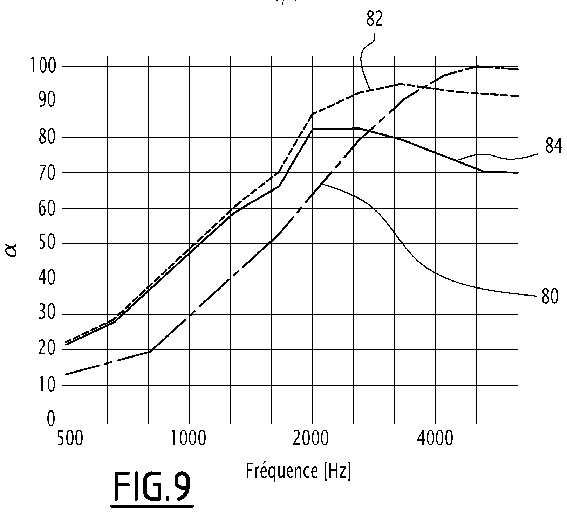

À titre d'exemple, la figure 9 illustre les courbes d'absorption en fonction de la fréquence pour différentes pièces.

La courbe 80 illustre l'absorption en fonction de la fréquence pour une pièce de l'état de la technique comportant un corps de base 16 en feutre d'épaisseur 15 mm et de masse surfacique égale à 1200g/m2. La courbe 82 illustre l'absorption en fonction de la fréquence pour une autre pièce comportant une couche de base formée par un tapis en Dilour aiguilleté, un feutre absorbant de type « Tritec » de masse surfacique égale à 600g/m2 appliqué sur le corps de base 16 et un feutre d'épaisseur 15 mm et de masse surfacique égale à 1200g/m2.

La courbe 84 illustre l'absorption en fonction de la fréquence pour une pièce selon l'invention comprenant une couche de base 16 comportant un tapis en Dilour aiguilleté, une couche surfacique 18 en film perforé appliquée sur le corps de base 16 et un feutre d'épaisseur 15 mm et de masse surfacique égale à 1200g/m2. La densité surfacique de perforations est égale à 500 perforations par cm2 et le taille de chaque perforation est de 0,1 mm. La résistance au passage de l'air de la couche surfacique 18 est alors de 500 N.s/m3.

Les courbes 82 et 84 montrent une absorption significativement améliorée dans les basses à moyennes fréquences, la pièce selon l'invention étant significativement plus légère que celles de l'état de la technique, puisqu'elle ne comporte pas de feutre « Tritec ».

## Revendications

**1.** Pièce (10) d'insonorisation de véhicule automobile comportant :

- un corps de base (16) en mousse, le corps de base (16) présentant des reliefs (12) de conformation ;
- une couche surfacique (18), appliquée sur le corps de base (16), la couche surfacique (18) comportant une pluralité de perforations traversantes (22) et des régions (24) étanches au passage de l'air entre les perforations (22) ;
chaque perforation (22) présente une dimension transversale inférieure à 1,5 mm, avantageusement inférieure à 1 mm, notamment comprise entre 0,1 mm et 0,5 mm,
**caractérisée en ce que** la densité surfacique de perforations (22) est supérieure à 20 perforations par centimètre carré et est notamment comprise entre 50 perforations par centimètre carré et 600 perforations par centimètre carré, notamment comprise entre 50 perforations par centimètre carré et 500 perforations par centimètre carré, et **en ce que**
la résistance au passage de l'air de la couche surfacique (18) munie des perforations (22) est supérieure à 250 N.s.m$^{-3}$, et
la couche surfacique (18) est une peau formée d'un seul tenant avec la couche de mousse.

**2.** Pièce (10) selon la revendication 1, dans laquelle la résistance au passage de l'air de la couche surfacique (18) est comprise entre 250 N.s.m$^{-3}$ et 1000 N.s.m$^{-3}$.

**3.** Pièce (10) selon l'une quelconque des revendications précédentes, dans laquelle chaque perforation (22) présente une section transversale constante sur toute sa hauteur à travers la couche surfacique (18).

**4.** Pièce (10) selon l'une quelconque des revendications précédentes, dans laquelle chaque perforation (22) est formée par ablation laser.

**5.** Pièce (10) selon l'une quelconque des revendications précédentes, dans laquelle l'épaisseur maximale de la couche surfacique (18) est inférieure à 10 % de l'épaisseur maximale du corps de base (16).

**6.** Procédé de fabrication d'une pièce (10) d'insonorisation de véhicule automobile, comprenant les étapes suivantes :

- formation d'un corps de base (16) en mousse et de la couche surfacique (18) par moussage d'un mélange précurseur dans un moule de moussage (20), la couche surfacique (18) étant une peau formée d'un seul tenant avec la couche de mousse , la couche surfacique (18) étant imperméable au passage de l'air ;
- disposition du corps de base (16) et de la couche surfacique (18) sur une surface de maintien (15), le corps de base (16) présentant des reliefs (12) de conformation ;
- réalisation, après la disposition du corps de base (16) et de la couche surfacique (18) sur la surface de maintien (15), d'une pluralité de perforations (22) traversantes à travers la couche surfacique (18), des régions (24) étanches au passage de l'air étant définies entre les perforations (22), chaque perforation (22) présentant une dimension transversale inférieure à 1,5 mm, avantageusement inférieure à 1 mm, notamment comprise entre 0,1 mm et 0,5 mm,
la densité surfacique de perforations (22) étant supérieure à 20 perforations par centimètre carré et est notamment comprise entre 50 perforations par centimètre carré et 600 perforations par centimètre carré, notamment comprise entre 50 perforations par centimètre carré et 500 perforations par centimètre carré, et en ce que la résistance au passage de l'air de la couche surfacique (18) munie des perforations (22) étant supérieure à 250 N.s.m$^{-3}$.

**7.** Procédé selon la revendication 6, dans lequel les perforations (22) sont réalisées par ablation laser.

**8.** Procédé selon l'une quelconque des revendications 6 ou 7, dans lequel les perforations (22) sont réalisées en maintenant le corps de base (16) en appui sur la surface de maintien (15).

**9.** Procédé selon l'une quelconque des revendications 6 à 8, dans lequel le moule de moussage présente une face de contact avec la couche surfacique (18), la surface de contact étant dépourvue d'agent démoulant susceptible de réagir chimiquement avec le mélange précurseur.

**Patentansprüche**

1.  Schalldämmbauteil (10) für ein Kraftfahrzeug, aufweisend:

    - einen Grundkörper (16) aus Schaumstoff, wobei der Grundkörper (16) Orientierungserhebungen (12) aufweist;
    - eine Oberflächenschicht (18), die auf dem Grundkörper (16) aufgebracht ist, wobei die Oberflächenschicht (18) eine Mehrzahl von durchgehenden Perforationen (22) und zwischen den Perforationen (22) luftdichte Bereiche (24) aufweist;
    wobei jede Perforation (22) eine Querabmessung kleiner als 1,5 mm, vorzugsweise kleiner als 1 mm, insbesondere zwischen 0,1 mm und 0,5 mm aufweist,
    **dadurch gekennzeichnet, dass** die Oberflächendichte an Perforationen (22) größer als 20 Perforationen pro Quadratzentimeter, insbesondere zwischen 50 Perforationen pro Quadratzentimeter und 500 Perforationen pro Quadratzentimeter beträgt und dass
    der Luftdurchgangswiderstand der mit Perforationen (22) ausgerüsteten Oberflächenschicht (18) größer als 250 Nsm$^{-3}$ ist und
    die Oberflächenschicht (18) eine Haut ist, die aus einem Stück mit der Schaumstoffschicht gebildet ist.

2.  Bauteil (10) nach Anspruch 1, bei dem der Luftdurchgangswiderstand der Oberflächenschicht (18) zwischen 250 Nsm$^{-3}$ und 1000 Nsm$^{-3}$ liegt.

3.  Bauteil (10) nach einem beliebigen der vorhergehenden Ansprüche, bei dem jede Perforation (22) einen über ihre gesamte Höhe konstanten Querschnitt durch die Oberflächenschicht (18) hindurch aufweist.

4.  Bauteil (10) nach einem beliebigen der vorhergehenden Ansprüche, bei dem jede Perforation (22) durch Laserablation gebildet ist.

5.  Bauteil (10) nach einem beliebigen der vorhergehenden Ansprüche, bei dem die maximale Dicke der Oberflächenschicht (18) kleiner als 10% der maximalen Dicke des Grundkörpers (16) beträgt.

6.  Verfahren zum Herstellen eines Schalldämmbauteils (10) für ein Kraftfahrzeug, die folgenden Schritte umfassend:

    - Bilden eines Grundkörpers (16) aus Schaumstoff und der Oberflächenschicht (18) durch Aufschäumen einer Vorstufen-Mischung in einer Aufschäumform, wobei die Oberflächenschicht (18) eine Haut ist, die aus einem Stück mit der Schaumstoffschicht gebildet ist, wobei die Oberflächenschicht (18) luftundurchlässig ist;
    - Anordnen des Grundkörpers (16) und der Oberflächenschicht (18) auf eine Haltefläche (15), wobei der Grundkörper (16) Orientierungserhebungen (12) aufweist;
    - Herstellen nach dem Anordnen des Grundkörpers (16) und der Oberflächenschicht (18) auf die Haltefläche (15) einer Mehrzahl von Perforationen (22), die durch die Oberflächenschicht (18) hindurchgreifen, wobei luftdichte Bereiche (24) zwischen den Perforationen (22) definiert sind und jede Perforation (22) eine Querabmessung kleiner als 1,5 mm, vorzugsweise kleiner als 1 mm, insbesondere zwischen 0,1 mm und 0,5 mm aufweist,
    wobei die Oberflächendichte an Perforationen (22) größer als 20 Perforationen pro Quadratzentimeter, insbesondere zwischen 50 Perforationen pro Quadratzentimeter und 500 Perforationen pro Quadratzentimeter beträgt und dass der Luftdurchgangswiderstand der mit Perforationen (22) ausgerüsteten Oberflächenschicht (18) größer als 250 Nsm$^{-3}$ ist.

7.  Verfahren nach Anspruch 6, bei dem die Perforationen (22) durch Laserablation realisiert sind.

8.  Verfahren nach einem beliebigen der Ansprüche 6 oder 7, bei dem die Perforationen (22) hergestellt werden, indem der Grundkörper (16) in Abstützung auf einer Haltefläche (15) gehalten wird.

9.  Verfahren nach einem beliebigen der Ansprüche 6 bis 8, bei der die Aufschäumform eine Kontaktfläche mit der Oberflächenschicht (18) aufweist, wobei die Kontaktfläche kein Entformungsmittel aufweist, das zum chemischen Reagieren mit der Vorstufen-Mischung geeignet ist.

**Claims**

1.  A motor vehicle soundproofing part (10), including:

    - a base body (16) made from foam, the base body (16) having shaping reliefs (12);
    - a surface layer (18), applied on the base body (16), the surface layer (18) including a plurality of through perforations (22) and airtight regions (24) between the perforations (22);

each perforation (22) having a transverse dimension smaller than 1.5 mm, advantageously smaller than 1 mm, in particular comprised between 0.1 mm and 0.5 mm, **characterized in that** the surface density of perforations (22) is greater than 20 perforations per square centimeter and is in particular comprised between 50 perforations per square centimeter and 600 perforations per square centimeter, in particular comprised between 50 perforations per square centimeter and 500 perforations per square centimeter, and **in that** the resistance to the passage of air of the surface layer (18) provided with the perforations (22) is greater than 250 N.s.m$^{-3}$, and the surface layer (18) being a skin formed in one piece with the foam layer.

2. The part (10) according to claim 1, wherein the resistance to the passage of air of the surface layer (18) is comprised between 250 N.s.m$^{-3}$ and 1000 N.s.m$^{-3}$.

3. The part (10) according to any one of the preceding claims, wherein each perforation (22) has a constant cross-section over its entire height through the surface layer (18).

4. The part (10) according to any one of the preceding claims, wherein each perforation (22) is formed by laser ablation.

5. The part (10) according to any one of the preceding claims, wherein the maximum thickness of the surface layer (18) is less than 10% of the maximum thickness of the base body (16).

6. A method for manufacturing a motor vehicle soundproofing part (10), comprising the following steps:

    - forming a base body (16) made from foam and of a surface layer (18) by foaming of a precursor mixture in a foaming mold (20), the surface layer (18) being a skin formed in one piece with the foam layer, the surface layer (18) being impermeable to the passage of air;
    - positioning the base body (16) and the surface layer (18) on a maintaining surface (15), the base body (16) having shaping reliefs (12);
    - producing, after arranging the base body (16) and the surface layer (18) on the maintaining surface (15), a plurality of through perforations (22) through the surface layer (18), airtight regions (24) being defined between the perforations (22), each perforation (22) having a transverse dimension smaller than 1.5 mm, advantageously smaller than 1 mm, in particular comprised between 0.1 mm and 0.5 mm,

the surface density of perforations (22) being greater than 20 perforations per square centimeter and is in particular comprised between 50 perforations per square centimeter and 600 perforations per square centimeter, in particular comprised between 50 perforations per square centimeter and 500 perforations per square centimeter, and in that the resistance to the passage of air of the surface layer (18) provided with the perforations (22) being greater than 250 N.s.m$^{-3}$.

7. The method according to claim 6, wherein the perforations (22) are made by laser ablation.

8. The method according to any one of claims 6 or 7, wherein the perforations (22) are made while keeping the base body (16) bearing on the maintaining surface (15).

9. The method according to any one of claims 6 to 8, wherein the foaming mold has a contact face with the surface layer (18), the contact layer being free of stripping agent that may react chemically with the precursor mixture.

FIG.1

FIG.2

FIG.3

FIG.4

FIG.5

FIG.8

FIG.6

FIG.7

**FIG.9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3966526 A

- US 4263356 A

**Littérature non-brevet citée dans la description**

- Mesures des paramètres caractérisant un milieu poreux. Etude expérimentale du comportement acoustique des mousses aux basses fréquences. **MICHEL HENRY.** thèse. l'Université du Mans, 03 Octobre 1997